Europäisches Patentamt

European Patent Office

Office européen des brevets

(19)

(11) EP 0 933 648 A1

(12) EUROPEAN PATENT APPLICATION

(43) Date of publication:
04.08.1999 Bulletin 1999/31

(51) Int Cl.⁶: $G01S\ 13/92$, $G01S\ 13/34$, $G01S\ 13/58$

(21) Application number: 99200140.4

(22) Date of filing: 20.01.1999

(84) Designated Contracting States:
AT BE CH CY DE DK ES FI FR GB GR IE IT LI LU MC NL PT SE
Designated Extension States:
AL LT LV MK RO SI

(30) Priority: 22.01.1998 NL 1008087

(71) Applicant: CHL Netherlands B.V.
2222 AG Katwijk (NL)

(72) Inventor: Willemse, Cornelis Nicolaas
1251 AC Laren (NH) (NL)

(74) Representative: Lips, Hendrik Jan George, Ir.
HAAGSCH OCTROOIBUREAU
Breitnerlaan 146
2596 HG Den Haag (NL)

(54) Doppler radar traffic measuring system

(57) The invention relates to a doppler radar traffic measuring system for measuring and monitoring traffic on traffic routes, such as highways, railways, waterways, locks, airports and the like.

The system has a radar transmitter/receiver device, by means of which FMCW radar of two adjacent frequencies is transmitted. The difference in phase of the difference frequencies is used for determining the distance which can be converted to a specific lane, in which a measured traffic participant (vehicle, ship, train) is located.

By this system it is possible to measure the speed of a traffic participant and at the same time the lane in which said traffic participant is located. Furthermore, by using the fact, whether the doppler displacement is positive or negative, the driving (sailing) direction can be determined, and can be added to the lane concerned.

In this way, a reliable and universal traffic measuring system is obtained.

EP 0 933 648 A1

## Description

The invention relates to a doppler radar traffic measuring system for measuring and monitoring traffic on traffic routes and the like, provided with a radar transmitter/receiver device, by which a fixed measuring area is covered by a wave beam of a fixed frequency across a fixed angle, in which the radiation reflected by traffic passing the measuring area is collected, and provided with means for determining the speed of the traffic from the doppler displacement of reflected radiation and to produce alarm signals and/or activation signals for a photo camera depending on chosen treshold values.

Doppler radar traffic measuring systems are known and are employed in particular for monitoring highways for automatic registration of the speed of passing vehicles. Such a system is described in e.g. dutch patent application 93 00672. With this known system, a wave beam of one single frequency is employed, and the speed of the vehicle can be derived from the returned doppler frequency, produced by the doppler displacement as a consequence of the speed of the vehicle.

The reliability of said speed measurements depends on, among other things, the intensity of traffic. Interference occurs when, among other things, several vehicles are in the radar beam at the same time, and occurs by reflections between vehicles. At present, measurements which are considered as being inreliable on statistical grounds are rejected.

The object of the invention is to extend and such a measuring system and improve it, in that, apart from the speed, the distance from the vehicle to the measuring system is measured as well, and said distance can be converted into an indication of the lane in which the vehicle is moving.

To that end, the invention provides for a doppler radar measuring system as defined in the pre-characterizing portion, characterized in that the radar transmitter/receiver device is designed for continuously transmitting alternately first radar signals of a first frequency and second radar signals of a second frequency, said second frequency lies close to said first frequency, and being provided with means arranged for determining from the difference of phase between returned first and second signals - reflected by a traffic participant passing the measuring area - the distance to said traffic participant and convert it into the lane in which said traffic participant is located.

In principle, it would be possible to determine a distance using one single doppler signal. After all, the phase of the reflected signal is proportional to the double distance and inversely proportional to the wavelength of the transmitted signal. However, since the measuring frequency is considerably high, e.g. 24 GHz, the wavelength is small, and this means that with a frequency of 24 GHz, one could only measure a distance of 0,6 cm.

According to the invention, two measuring frequencies being very close to each other are employed, and a distance range can be determined from the difference between the two transmitted frequencies, said distance range being approximately 150 metres with a frequency difference of 1 MHz. When this is converted into the total road width, this means a road width of 50 metres, which is amply sufficient for monitoring a highway having several lanes.

According to the invention, the distance is coupled to the measured speed and said distances is converted to the lane, in which a vehicle is located. Owing to this, location and movement of the vehicle are recorded unambiguously, which yields very reliable monitoring.

Furthermore, with the invention, the driving direction is determined from the negative or positive displacement of the doppler effect independent of the driving lane.

This enables efficient measuring and monitoring of all lanes of a traffic route, both in outgoing and return directions using one single system.

The invention is not limited to highways in particular. Within the scope of the invention, traffic routes are understood to comprise also railroads, waterways, e.g. traffic in locks, landing strips on airports, and the like. The doppler radar traffic measuring system is a universal system, and can be applied in all these fields. The system can operate in a fixed arrangement. Further, it is possible that the system is transportable. Another possibility is that the system is located on or inside a moving vehicle or vessel.

The invention will be explained further with reference to the drawings. In the drawings:

Fig. 1 shows a schematic arrangement of a doppler radar traffic measuring system according to the invention, monitoring a four lane highway;
Fig. 2 shows a block diagram of the signal processing components of said system; and
Fig. 3 a wave diagram of the transmitted and received signals.

## 1. Principle of distance measurement

The principle of distance measurement with the invention is based on measuring the difference of phase between two doppler signals. Said two doppler signals are obtained by alternately transmitting at two frequencies fl and f2. Transmission is effected with a frequency of approximately 24.125 GHz, and changing over between the two frequencies takes place at a frequency of 31.25 KHz. The change-over frequency of 31.25 KHz has been chosen in connection with the highest occurring doppler frequencies and the practical realization of said system. In connection with the nyquist theorema, said change-over frequency must be at least twice the amount of the highest occurring doppler frequency. Since transmission takes place continuously, we can speak of an FMCW radar.

## 2. Arrangement

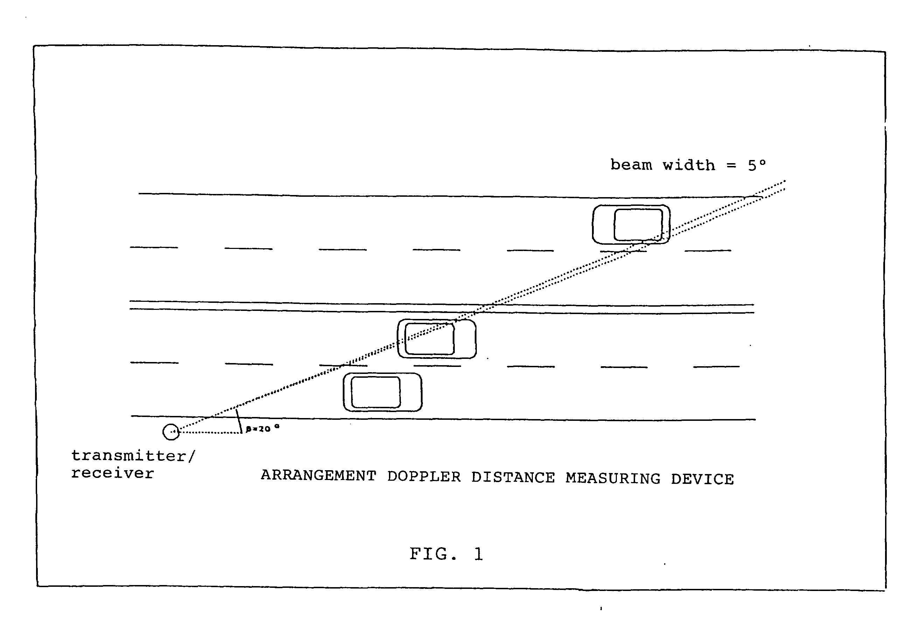

In order to detect vehicles, a high frequency signal is transmitted obliquely across the road in a narrow beam (see Fig. 1). The receiver is coupled to the same antenna so that reflected beams can be received. The beam has a width of 5° and encloses an angle of B = 20° with the roadway.

## 3. Operation

When a vehicle is located in said beam, the transmitted signal will be reflected and will be received by the receiver. Due to the doppler effect, the frequency of said received signal, depending on the driving direction, will be slightly higher or lower (doppler displacement). By mixing (multiplying) said received signal with a signal corresponding to said transmitted signal in frequency and phase, a signal will arise having a frequency equalling the doppler displacement, hereinafter indicated as the doppler frequency. The received signal is not immediately added to the mixer, but is first split in two channels, named I and Q. The difference of phase between said two channels is 90°. The driving direction can be calculated from the difference of phase of the doppler signal of said two channels, see 3.2.

## 3. Determination of the distance

With a single transmitted frequency, the difference in phase $\Phi$ between transmitted and received signal is determined by:

$$(1) \qquad \Phi = \frac{2 * S}{\lambda} * 2\pi \ [rad]$$

waarbij S is the distance and $\lambda$ is the wavelength of the signal. In principle, the distance can be determined from that. However, since it is only possible to determine the phase across an angle of $0 .. 2\pi$, the distance range is limited to $\lambda/2$. With a frequency of 24 GHz, this is only 0,6 cm.

However, by switching between two frequencies, two different phases are measured:

$$(2) \qquad \Phi1 = \frac{2 * S}{\lambda 1} * 2\pi \ [rad]$$

$$(3) \qquad \Phi2 = \frac{2 * S}{\lambda 2} * 2\pi \ [rad]$$

The difference of phase between these is expressed by:

$$(4) \qquad d\Phi = \Phi2 - \Phi1 = 2 * S * \frac{\lambda 1 - \lambda 2}{\lambda 1 * \lambda 2} * 2\pi = \frac{2 * S}{\lambda \, d}$$

Here, $\lambda d$ is the wavelength corresponding to a frequency of f2 - f1. After all, $\lambda = c / f$ so that:

$$(5) \qquad \frac{c/f1 - c/f2}{c/f1 * c/f2} = \frac{f2 - f1}{c} = \frac{df}{c}$$

Thus the maximum distance range is extended to $\lambda d/2$. For a frequency sweep of 1 MHz, this corresponds to 150 m.

Therefore, for the distance:

$$(6) \qquad S = \frac{\lambda d}{4\pi} * d\Phi$$

Said distance can be divided into the several lanes in a simple way.

## 3.2 Moving target

When a reflection of a moving target having speed v is received, is for the distance $S(t) = S + v * t$. With $\lambda = c/f$, inserted in (2) and (3) gives:

$$(7) \qquad \Phi1 = \frac{2 * (S + v * t) * f1}{C} * 2\pi \ [rad]$$

$$(8) \qquad \Phi2 = \frac{2 * (S + v * t) * f2}{C} * 2\pi \ [rad]$$

After mixing the transmitted signal and suppressing the sum frequency, a signal proportional to the COS of the difference of phase $\Phi$ arises:

$$(9) \qquad D1 = A1 * cos \, (wd1 * t + \Theta1)$$

$$(10) \qquad D2 = A2 * cos \, (wd2 * t + \Theta2)$$

wd1 = doppler angle frequency $v * 4\pi * f1 / c$

wd2 = doppler angle frequency $v * 4\pi * f2 / c$

$\Theta1$ = phase - 1 $\qquad = S * 4\pi * f1 / c$

$\Theta2$ = phase - 2 $\qquad = S * 4\pi * f2 / c$

Since f1 and f2 differ very little from each other, about 1 MHz in relation to 24.000 MHz, wdl and ld2 will be almost equal and be within the resolution of the frequency measurement

$$(11) \qquad d\Theta = \Theta2 - \Theta1 = S * 4\pi * (f2 - f1) / c$$

Since for the doppler frequency applies $fd = wd / 2\pi$, velocity and distance can be calculated as follows:

$$(12) \qquad S = \frac{c}{4\pi * df} * d\Theta$$

$$(13) \qquad vd \frac{c}{2 * f} * fd$$

This is not the actual velocity by the velocity component in the direction of the antenna. For the actual velocity, a correction is to be made, depending on the angle $\beta$ between radar beam and roadway, and now applies:

$$(14) \qquad Vw = \frac{Vd}{COS(\beta)} = \frac{c}{2 * f * COS(\beta)} * fd$$

### 3.3 Determination of driving direction

By splitting the received signal in two channels having a difference in phase of 90°, after mixing two doppler signals displaced over 90° thus arise:

$$(15) \qquad Di = Ai * COS (\pm wd * t + \Theta)$$

$$(16) \qquad Dq = Aq * COS (\pm wd * t + \Theta + \pi2)$$

$$(16a) \qquad Dq = Aq * SIN (\pm wd * t + \Theta)$$

The $\pm$ - sign depends on the fact whether the received frequency is higher (oncoming traffic) or lower (outgoing traffic) than the transmitted frequency.
Since:

$$(17) \qquad SIN (-wd * t) = SIN (wd * t),$$

and

$$(18) \qquad COS (-wd * t) = COS (wd * t)$$

for oncoming traffic applies:

$$(19) \qquad Di = Ai * COS(wd * t + \Theta)$$

$$(20) \qquad Dq = Aq * SIN(wd * t + \Theta)$$

thus a difference in phase between Vi and Vq of +90°, and for outgoing traffic:

$$(21) \qquad Di = Ai * COS(wd * t)$$

$$(22) \qquad Dq = - Aq * SIN(wd * t)$$

thus a difference in phase between Di and Dq of -90°, or 270°.
Thus, by measuring the difference in phase between Di and Dq the driving direction can be determined according to;

Phase approx. 90° : oncoming traffic;
Phase approx. 270° : outgoing traffic.

The phase can be assigned to the accompanying lane.

### 4. Signal processing

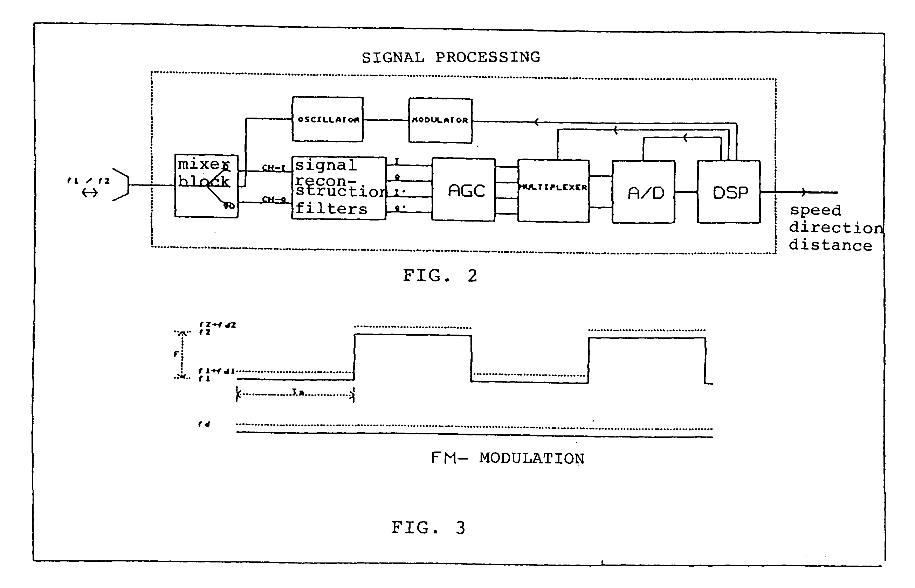

The block diagram of the signal processing is illustrated in Fig. 2.
The oscillator, driven by the modulator, generates a microwave signal having the frequency of e.g. f1 = 24.125 GHz and f2 = 24,126 GHz.
The transmitted power is approx. +10 dBm.
In the same block the received signal is split up into two channels having a difference in phase of 90°. Subsequently said signals are mixed with a part of the signal originating from the gunn oscillator.
In said mixing process a sum and difference frequency is created, the signal having the sum frequency is suppressed and the difference frequency equals the doppler displacement. Thus, this is a low frequency signal having a frequency of approx. 0 ... 10,000 Hz, corresponding to a speed of 0 ... 240 km/h.
For signal processing, in the signal structuring block the two channels CH-I and CH-Q are once again split into the channels I and Q for the transmitted frequency fl and I' resp. Q for the frequency f2.
By change-over of the transmission frequency of 32 KHz, in fact two systems are operative simultaneously, each having a sampling frequency of 16 KHz.
Then, these four signals are amplified to a fixed level by the AGC (Automatic Gain Control) so that the range of the A/D converter is used to the maximum.
Due to provision of the multiplexer, it is possible to apply only two A/D converters instead of four.
Subsequently, the digitized signal of said four channels is supplied ot the DSP (Digital Signal Processor). This DSP enables calculating the frequency spectrum and mutual phase connection of said four channels in real time. Said calculation takes place by means of FFT's.
From the frequency spectrum it is determined whether something is detected and at what speed, whereupon distance and direction can be determined from the phase relations.

## 5. Abbreviations

A1 =      amplitude doppler signal at f1
A2 =      amplitude doppler signal at f2
Ai =       amplitude doppler signal I-channel
Aq =      amplitude doppler signal Q-channel

D1 =      doppler signal at fl
D2 =      doppler signal at f2
D1 =      doppler signal I-channel
Aq =      amplitude doppler signal I-channel
Dq =      amplitude doppler signal Q-channel
Vd =      speed measured from doppler frequency
Vw =      actual speed
fd =       doppler frequency [Hz]
wd =      doppler angular frequency [rad./s]

f1 =       frequency of transmitted signal, low frequency [Hz]
f2 =       frequency of transmitted signal, high frequency [Hz]
df =       difference frequency f2 - fl

$\lambda$ =       wavelength [m]
$\lambda 1$ =      wavelength of transmitted signal at fl [m]
$\lambda 2$ =      wavelength of transmitted signal at f2 [m]
$\lambda d$ =      wavelength at f = f2 - fl

$\Phi$ =       phase difference between transmitted and received signal [rad]
$\Phi 1$ =      idem at f1 [rad]
$\Phi 2$ =      idem at f2 [rad]
$d\Phi$ =      difference in phase $\Phi 2 - \Phi 1$ [rad]

$\Theta 1$ =      phase of doppler signal at fl [rad]
$\Theta 2$ =      phase of doppler signal at f2 [rad]
$d\Theta$ =      difference in phase $\Theta 2 - \Theta 1$ [rad]

S =       distance [m]
S(t) =    distance as a function of the time [m]
v =       speed [m/s]
c =       speed of light $3 * 10^8$ [m/s]

In the above, the invention has been specifically explained by way of doppler radar traffic measuring systems according to the invention, specifically intended for monitoring a two way highway. However, it will be obvious, that the invention is not limited to said embodiment, but that many variations are possible, both as for embodiments and application thereof.

As for the embodiment several variations will be clear to the expert after reading the above.

As for application thereof, there are numerous possibilities. For example, the system according to the invention can be coupled to traffic jam monitoring and speed indication systems on highways. Further, it can be applied with railways for train monitoring, on airports for monitoring e.g. runways and landing strips, and it can be used for shipping detection. There, a special application is monitoring two-way traffic of ships in locks and the like. Further modifications and variations will be clear to the expert.

**Claims**

1.  Doppler radar traffic measuring system for measuring and monitoring traffic on traffic routes and the like, provided with a radar transmitter/receiver device,

    by which a fixed measuring area is covered by a wave beam of a fixed frequency across a fixed angle, in which the radiation reflected by traffic passing the measuring area is collected, and provided with means for determining the speed of the traffic from the doppler displacement of the reflected radiation and to produce alarm signals and/or activation signals for a photo camera depending on chosen treshold values,

    characterized in that the radar transmitter/receiver device

    is designed for continuously transmitting alternately first radar signals of a first frequency and second radar signals of a second frequency, said second frequency being close to said first frequency, and being provided with means arranged for determining from the difference of phase between returned first and second signals - reflected by a traffic participant passing the measuring area - the distance to said traffic participant and converting said distance into the lane in which said traffic participant is located.

2.  Doppler radar traffic measuring system according to claim 1, for measuring and monitoring a highway having several lanes, characterized in that the system is arranged along a side of the highway and covers the total driving width with its wave beam across a fixed angle of incidence, and that it determines both speed and lane of the vehicles passing the wave beam.

3.  Doppler radar traffic measuring system according to claim 2, characterized in that the system is provided with means for determining the driving direction for each lane from the fact whether the frequencies of the received reflected signals are higher or lower than the frequencies of the transmitted signals.

4. Doppler radar traffic measuring system according to claim 2, characterized in that the system is fixedly arranged.

5. Doppler radar traffic measuring system according to claim 2, characterized in that the system is transportable.

6. Doppler radar traffic measuring system according to claim 2, characterized in that the system is a mobile system, built-in in a vehicle.

7. Doppler radar traffic measuring system according to claim 2 or 3, characterized in that the system can be coupled to other systems such as speed indication systems and traffic jam prevention systems.

8. Doppler radar traffic measuring system according to claim 1, characterized in that the transmitter device includes a frequency modulator for alternately modulating the transmitter frequency in the first and second frequency.

beam width = 5°

β=20°

transmitter/
receiver

ARRANGEMENT DOPPLER DISTANCE MEASURING DEVICE

FIG. 1

EP 0 933 648 A1

SIGNAL PROCESSING

OSCILLATOR — MODULATOR

mixer block

CH-I

CH-2

signal recon-struction filters

AGC

MULTIPLEXER

A/D

DSP

speed
direction
distance

f1 / f2

FIG. 2

FM— MODULATION

FIG. 3

**European Patent
Office**

**EUROPEAN SEARCH REPORT**

Application Number

EP 99 20 0140

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.6) |
| X | US 4 740 045 A (GOODSON WILLIAM D ET AL) 26 April 1988 | 1 | G01S13/92 G01S13/34 G01S13/58 |
| Y | * the whole document * | 2-6 | |
| Y | WO 97 37242 A (GATSOMETER B V ;GATSONIDES TOM (NL)) 9 October 1997 * the whole document * | 2-6 | |

TECHNICAL FIELDS
SEARCHED      (Int.Cl.6)

G01S

The present search report has been drawn up for all claims

| Place of search | Date of completion of the search | Examiner |
|---|---|---|
| THE HAGUE | 26 April 1999 | Zaccà, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 99 20 0140

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-1999

| Patent document cited in search report | | Publication date | Patent family member(s) | | Publication date |
|---|---|---|---|---|---|
| US 4740045 | A | 26-04-1988 | NONE | | |
| WO 9737242 | A | 09-10-1997 | CA | 2250823 A | 09-10-1997 |

EPO FORM P0459

For more details about this annex : see Official Journal of the European Patent Office, No. 12/82